# EUROPÄISCHE PATENTSCHRIFT

(11) **EP 0 899 432 B1**
(45) Veröffentlichungstag und Bekanntmachung des Hinweises auf die Patenterteilung: **11.12.2002**
(21) Anmeldenummer: 98890231.8
(22) Anmeldetag: 06.08.1998
(51) Int. Cl.: F02B 3/02, F02B 23/10

(54) **Brennkraftmaschine mit Fremdzündung**
Spark ignition internal combustion engine
Moteur à combustion interne à allumage par étincelle

(30) Priorität: 28.08.1997 AT 53297
(43) Veröffentlichungstag der Anmeldung: 03.03.1999
(73) Patentinhaber: AVL List GmbH, 8020 Graz (AT)
(72) Erfinder: Piock, Walter, Dr., 8151 Hitzendorf (AT); Wirth, Martin, Dr. Dipl.-Ing., 8151 Hitzendorf (AT)
(74) Vertreter: Babeluk, Michael, Dipl.-Ing. Mag.

(56) Entgegenhaltungen:
- EP-A- 0 464 622
- AT-U- 1 392
- FR-A- 2 421 276
- PATENT ABSTRACTS OF JAPAN vol. 1995, no. 07, 31. August 1995 (1995-08-31) & JP 07 102976 A (TOYOTA MOTOR CORP), 18. April 1995 (1995-04-18)

## Beschreibung

Die Erfindung betrifft eine Brennkraftmaschine mit Fremdzündung und zumindest einem hin- und hergehenden Kolben, mit einer Zündeinrichtung und mindestens einer Kraftstoffeinbringungseinrichtung pro Zylinder zur direkten Kraftstoffeinbringung im wesentlichen in Richtung Zündeinrichtung, sowie mit zumindest einem eine Drallströmung im dachförmig begrenzten Brennraum erzeugenden Einlaßkanal, wobei die Oberfläche des Kolbens eine die Drallbewegung der Zylinderladung unterstützende, asymmetrische, bogenförmige Leitrippe aufweist.

Ständig steigende Anforderungen an den Kraftstoffverbrauch und die Reduktion der Abgasemissionen, insbesondere der Kohlenwasserstoffe, erfordern den Einsatz neuer Technologien im Bereich der Verbrennungskraftmaschinen. Durch den heute üblichen Einsatz einer externen Gemischbildung bei Otto-Motoren, wie z.B. durch die Verwendung einer Saugrohreinspritzung oder eines Vergasers, strömt ein Teil des in den Brennraum und Zylinder eingesaugten Gemisches während der Ventilüberschneidungsphase, wenn Auslaß- und Einlaßventil gleichzeitig offen sind, in den Auspufftrakt der Brennkraftmaschine. Ein nicht unerheblicher Teil der meßbaren unverbrannten Kohlenwasserstoffe im Auspufftrakt stammt auch von Gemischteilen, die sich während der Verbrennung in Ringspalten oder wandnahen Bereichen, wo keine Verbrennung stattfindet, aufhalten. Zu diesen genannten Punkten kommt die notwendige Homogenisierung der Zylinderladung bei einem annähernd stöchiometrischen Mischungsverhältnis von Kraftstoff und Luft hinzu, welches eine sichere und aussetzerfreie Verbrennung sicherstellt. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 20% geschätzt werden.

Um diese Nachteile zu verhindern bzw. zu vermindern, werden schon seit langem Versuche unternommen, fremdgezündete Verbrennungskraftmaschinen ungedrosselt zu betreiben und den Kraftstoff erst nach Beendigung der Luftansaugung wie bei einer selbstzündenden Brennkraftmaschine innerhalb des Brennraums und Zylinders oder einer unmittelbar angeschlossenen Mischkammer einzubringen.

Dabei sind grundsätzlich drei Gemischbildungssysteme zu unterscheiden:
- Flüssigkeitshochdruckeinspritzung
- Luftunterstützte Kraftstoff-Einbringung
- Gemischeinblasung.

Aus SAE 780699 ist ein Verfahren bekannt, bei dem der Kraftstoff mittels einer Hochdruckeinspritzdüse direkt in den Brennraum der Verbrennungskraftmaschine eingespritzt wird. Die notwendige Zeit für die Aufbereitung des Gemisches begrenzt den zeitlichen Minimalabstand zwischen Einspritzzeitpunkt und Zündzeitpunkt. Es ist ein hohes Druckniveau für den Einspritzvorgang notwendig, um einerseits kurze Einspritzzeiten und andererseits eine gute Zerstäubung des Kraftstoffes mit entsprechend kleinem Tropfenspektrum zu erhalten. Die Aufbereitung und Dosierung des Kraftstoffes findet gleichzeitig statt. Um nur ein örtlich begrenztes Gebiet mit brennbarem Kraftstoff-Luftgemisch zu erhalten ist es andererseits notwendig, erst sehr spät im Motorzyklus den Kraftstoff einzubringen (ggf. erst während der Kompression kurz vor der Zündung), um die Zeit für die Ausbreitung und Verdünnung des Gemisches in der Brennraumluft zu begrenzen. Die Forderungen nach genügend früher Einspritzung für vollständige Kraftstoffverdampfung und möglichst später Einspritzung zur Aufrechterhaltung der Gemischschichtung stehen daher im Gegensatz zueinander. Die Entwicklungsbemühungen müssen somit darauf gerichtet sein, einerseits die charakteristische Zeit für die Gemischaufbereitung zu verkürzen und andererseits die charakteristische Zeit der Aufrechterhaltung der gewünschten Gemisch-Schichtung zu verlängern.

Aus SAE 940188 ist das Prinzip eines Einspritzventils bekannt, welches einen kegelförmigen Einspritzstrahl mit hoher Zerstäubungsgüte des Kraftstoffes erzielt. Durch Änderung des Kraftstoffdruckes und des Brennraumgegendruckes kann der Kegelwinkel des Einspritzstrahls beeinflußt werden. Eine charakteristische Eigenschaft derartiger Einspritzdüsen ist die Verbesserung der Zerstäubungsgüte mit steigendem Einspritzdruck. Diese gewünschte Abhängigkeit führt jedoch zu ebenfalls steigenden Geschwindigkeiten des Einspritzstrahls von bis zu 100 m/s und somit zu einem hohen Impuls des in den Brennraum eintretenden Kraftstoff-Sprays. Demgegenüber weist die Luftströmung im Brennraum, selbst bei starker einlaßgenerierter Drall- oder Tumblebewegung mit maximal ca. 25 - 30 m/s nur einen deutlich geringeren Impuls auf, weshalb der Einspritzstrahl in einer ersten Phase des Eintritts in den Brennraum nur unwesentlich von der Brennraumströmung beeinflußt wird.

Es stellt sich unter diesen Voraussetzungen die Aufgabe, aus dem Einspritzstrahl eine örtlich begrenzte Gemischwolke zu erzeugen, diese von der Mündung des Einspritzventiles in die Nähe der Zündkerze zu transportieren und das Gemisch innerhalb der Wolke weiter mit Brennraumluft zu vermischen. Dabei sind folgende Punkte wesentlich :
- Die Gemischwolke muß insbesondere bei niedrigen Motorlasten deutlich abgegrenzt bleiben und sich aus thermodynamischen Gründen sowie zur Reduzierung der Emissionen unverbrannter Kohlenwasserstoffe möglichst in der Mitte des Brennraumes befinden.
- Die Verdünnung des eingeblasenen Gemisches auf ein vorzugsweise stöchiometrisches Luftverhältnis muß in der vergleichsweise kurzen Zeitspanne zwischen Einspritzzeitpunkt und Zündzeitpunkt erfolgen.
- An der Zündkerze sollte eine geringe mittlere Strömungsgeschwindigkeit und gleichzeitig ein hohes Turbulenzniveau herrschen, um die Entflammung der Gemischwolke durch den Zündfunken zu begünstigen.

Bei der Gestaltung eines geeigneten Brennverfahrens für einen direkteinspritzenden Ottomotor sind neben den Charakteristiken der Einspritzstrahlausbreitung auch die zur Verfügung stehenden Brennraumabmessungen zu berücksichtigen. Für PKW-Ottomotoren typische Hubräume des Einzelzylinders führen zu Bohrungsdurchmessern von ca. 65 bis 100 mm, wobei sich der Kolbenhub in der gleichen Größenordnung bewegt.

Bei einer Anordnung des Einspritzventils im Zylinderkopf in einer maximal ca. 70° zur Zylinderachse geneigten Position steht dem Einspritzstrahl im Falle einer späten Einspritzung kurz vor dem Zündzeitpunkt eine freie Ausbreitungsstrecke von max. 50 - 60 mm zu Verfügung, bevor der Einspritzstrahl auf die gegenüberliegende Brennraumwand (zumeist die Kolbenoberfläche) auftrifft. In Anbetracht der genannten Ausbreitungsgeschwindigkeiten des Einspritzstrahls muß daher ein Auftreffen zumindest eines Teils des Kraftstoff-Sprays auf der Kolbenoberfläche erwartet werden. Die Gestaltung der Brennrauminnenströmung sollte daher diesen Vorgang der Wandbenetzung berücksichtigen.

Zur Formung der Gemischwolke und zur Aufbereitung des Kraftstoff-Sprays können folgende Effekte genutzt werden :
- Umlenkung des hohen Impulses des Einspritzstrahls zur Zündkerze mit Hilfe der Kolbenoberfläche.
- Hoher Einspritzdruck zur Verbesserung der Zerstäubung und damit zur Beschleunigung der direkten Verdampfung des Kraftstoff-Sprays vor der Wandberührung.
- Erzeugung eines erhöhten Turbulenzniveaus im Bereich des Einspritzstrahls durch die Brennrauminnenströmung.
- Beschleunigung der Wandfilmverdampfung durch Erzeugung einer hohen Strömungsgeschwindigkeit am benetzten Bereich der Kolbenoberfläche.

Alle durch die Brennrauminnenströmung erzielbaren Maßnahmen setzen die Generierung eines hohen Ladungsbewegungsniveaus beim Einlaßvorgang voraus. Diese hohen Strömungsgeschwindigkeiten sollten möglichst lange während der Ansaug- und Kompressionsphase erhalten bleiben oder sogar während der Kompression verstärkt werden. Diese Forderung läßt sich am sinnvollsten durch eine einlaßgenerierte Drall- oder Tumblebewegung der Brennraumluft erreichen. Eine Drallbewegung (Rotation um die Zylinderachse) stellt die stabilste Strömungsstruktur in Zylinder dar, was zur geringsten Dissipation der Bewegungsenergie während der Kompression führt. Durch Ausbildung einer gegenüber dem Zylinderdurchmesser kleineren Kolbenmulde läßt sich während der Kompression aufgrund der Drallerhaltung eine Zunahme der Rotationsgeschwindigkeit des Drallwirbels erzielen.

Ein einlaßgenerierter Tumblewirbel (Rotation um eine zur Kurbelwelle parallele Achse) zeigt einerseits eine Beschleunigung der Rotation durch die Verkleinerung der Querschnittsfläche während der Kompression. Andererseits ist der Tumblewirbel im Vergleich zum Drall instabiler und neigt zum Zerfall in komplexere Sekundärwirbel. In der Endphase der Kompression ist bei genügend flachem Ventilwinkel (eines typischen Vierventil-Brennraums) ein starker Zerfall des Tumblewirbels in kleinere stochastisch verteilte Wirbel zu beobachten.

Aus der AT 001 392 Ul ist eine Brennkraftmaschine mit Fremdzündung und zumindest einem hin- und hergehenden Kolben mit einer Kolbenmulde bekannt, welche die einlaßgenerierte Drallströmung bei der Aufwärtsbewegung des Kolbens beschleunigt. Die Kolbenmulde ist dabei asymmetrisch gestaltet und weist einen Einlaufbereich mit zunehmender Muldentiefe, einen Zentralbereich mit maximaler Muldentiefe und einen Auslaufbereich mit abnehmender Muldentiefe auf. Zwischen dem Auslaufbereich und dem Einlaufbereich ist auf der Seite einer Kraftstoffeinbringungseinrichtung eine keilförmige Einschnürung vorgesehen. Die Form der Kolbenmulde bewirkt, daß einerseits ein Auftreffen der Kraftstoffstrahlen in Richtung der mittig angeordneten Zündkerze umgelenkt wird, und andererseits die Fallströmung während der Kompression durch die Kolbenmuldenform derart umgelenkt und beschleunigt wird, so daß im Auftreffbereich der Kraftstoffstrahlen eine auf die Zündkerze gerichtete Strömung mit hoher Geschwindigkeit erreicht wird. Das Turbulenzniveau reicht allerdings nicht aus, um bei jeder Drehzahl eine sichere Entflammung des Kraftstoffes sicher zu stellen.

Aus der JP 7-102976 A ist eine Brennkraftmaschine der eingangs genannten Art mit einer einzigen bogenförmigen Leitrippe bekannt, welche die Drallströmung in den Bereich der mittig angeordneten Zündkerze lenkt. Der Kraftstoff wird dabei in einen von den konkaven Leitflächen der Leitrippen begrenzten, muldenförmigen Bereich der Kolbenstirnfläche durch eine am Rand des Brennraumdaches angeordnete Einspritzdüse eingespritzt. Durch die seitliche Einspritzung zur Zylinderachse hin werden die Kraftstoffteilchen allerdings über die Leitrippe hinweggeschleudert und in einen durch eine konvexe Leitfläche der Leitrippe und den Kolbenrand begrenzten Bereich abgelenkt. Die abgelenkten Kraftstoffteilchen müssen erst wieder durch die Drallströmung in den Bereich der Zündkerze geführt werden, wobei ein relativ langer, sich über einen Winkelbereich von mehr als 180° erstreckender Strömungsweg entlang des Kolbenrandes zurückgelegt werden muß. Dies bewirkt, daß die abgelenkten Kraftstoffteilchen erst zu einem relativ späten Zeitpunkt im Bereich der Zündkerze eintreffen und für die Entflammung des Gemisches nicht mehr zur Verfügung stehen. Dies wirkt sich nachteilig für die Kohlenwasserstoffemissionen und für den Kraftstoffverbrauch aus.

In der FR 2 421 276 A1 wird ein Kolben mit einer turbulenzfördernd ausgebildeten Kolbenmulde für eine fremdgezündete Brennkraftmaschine gezeigt. Die asymmetrisch gestaltete Kolbenmulde weist drei verschieden große Einlaufbereiche auf, die in eine topfförmige asymmetrische Vertiefung der Kolbenmulde einmünden. Durch die drei Einlaufbereiche wird in der Vertiefung eine Drallströmung erzeugt.

Ferner ist aus der DE 649 738 C eine selbstzündende Viertakt-Brennkraftmaschine mit Schiebersteuerung und gegenüber dem Zylinderdurchmesser eingeschnürtem Brennraum bekannt. Der Kolben weist dabei in Richtung der Brennraumeinschnürung weisende Vertiefungen auf, welche die Strömung vom Einlaßbereich schraubenartig zum Brennraum lenkt. Für eine Brennkraftmaschine mit Fremdzündung und direkter Kraftstoffeinbringung ist diese Brennraumform nicht geeignet.

Aufgabe der vorliegenden Erfindung ist es, die genannten Nachteile zu vermeiden und die Zerstäubung und Entflammung des Kraftstoffes bei einer Brennkraftmaschine der eingangs genannten Art zu verbessern.

Erfindungsgemäß wird dies dadurch erreicht, daß die Leitrippe durch eine Anformung an der Kolbenoberfläche gebildet ist, welche die dachförmige Begrenzung des Brennraumes weitgehend nachbildet, und eine im wesentlichen zentral ausgebildete Brennraummulde sowie einen im Bereich der Kraftstoffeinbringungseinrichtung liegenden Muldeneinlauf ausweist, sowie daß die Leitrippe in Richtung der Drallströmung ein sich in Breite und Höhe verjüngendes Ende aufweist. Aufgrund der Nachbildung des zylinderkopfseitigen Brennraumdaches, durch die auf der Kolbenoberfläche ausgebildete Leitrippe und einer nahezu zentral angeordneten, ausgeprägten Brennraummulde kommt es zu einem Zurückschieben der über die Brennraummulde und Leitrippe hinwegströmenden (vagabundierenden) Kraftstoffteilchen durch eine sich zwischen der Kolbenoberfläche und dem Brennraumdach ausbildenden Quetschströmung.

In einer vorteilhaften Ausgestaltung der Erfindung ist vorgesehen, daß ausgehend vom Muldeneinlauf ein um das sich verjüngende Ende der Leitrippe herumgeführter Muldenzulauf vorgesehen ist, welcher als in die Kolbenoberfläche eingearbeitete rinnenartige Vertiefung ausgeführt ist. Durch diese Maßnahme kommt es zu einer weiteren Beschleunigung der Drallströmung Richtung Muldeneinlauf, wobei die auslaßseitige Quetschströmung ausgenützt wird.

In einer vorteilhaften Ausführungsvariante der Erfindung ist vorgesehen, daß an der Kolbenoberfläche einlaßseitige und auslaßseitige Quetschflächen ausgebildet sind, wobei die Leitrippe im Anschluß an diese Quetschflächen jeweils dachförmige Begrenzungsflächen aufweist, welche gegebenenfalls durch eine zur Kolbenoberfläche parallele Abflachung verbunden sind.

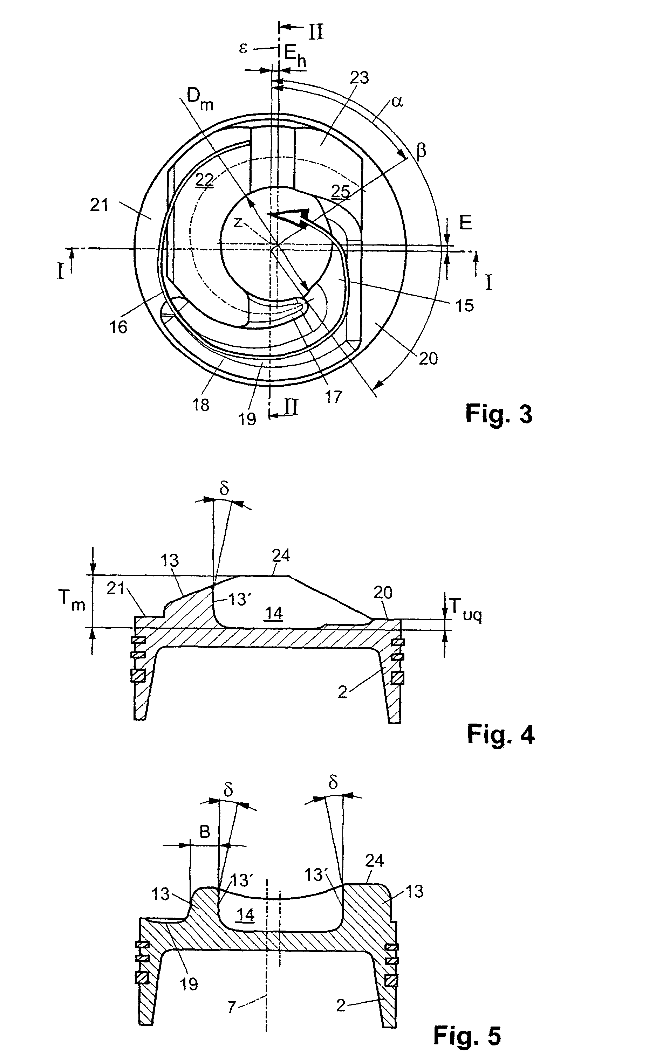

Erfindungsgemäß ist vorgesehen, daß der Flächenschwerpunkt z der Brennraummulde in der Ebene der Kolbenoberfläche zu einer Bezugsebene ε eine Exzentrizität Eₕ aufweist, für welche gilt -0,12*D < Eₕ < 0,12*D, wobei die Bezugsebene ε durch die Verschneidungslinie der beiden dachförmigen Begrenzungsflächen des Brennraumes und der Kolbenachse definiert ist und mit D der Kolbendurchmesser bezeichnet ist. Die Exzentrizität E im Bezug auf die Kolbenachse parallel zur Bezugsebene ε kann zwischen -0,03*D und +0,12*D liegen, wobei vorzugsweise eine Verschiebung der Brennraummulde von Vorteil ist, welche in Fig. 3 nach oben erfolgt.

Herstellungstechnische Vorteile ergeben sich insbesondere dann, wenn die Brennraummulde im wesentlichen kreisförmig ausgebildet ist.

Besondere Vorteile ergeben sich, wenn die innere Strömungsleitfläche der Leitrippe zur Kolbenachse einen Winkel δ zwischen -5° und 20° aufweist. Es sind somit Hinterschneidungen der Strömungsleitfläche bis zu 20° vorgesehen, um die Gemischwolke in der Brennraummulde zu halten.

Schließlich hat es sich als vorteilhaft erwiesen, wenn die Tiefe Tₘ der Brennraummulde größer ist als jene des rinnenartigen Muldenzulaufs.

Die Erfindung wird anhand der Figuren näher erläutert. Es zeigen:
- Fig. 1: die erfindungsgemäße Brennkraftmaschine in einem Längsschnitt nach der Linie 1-1 in Fig. 2 bzw. Fig. 3,
- Fig. 2: einen Längsschnitt nach der Linie II-II in Fig. 1 bzw. Fig. 3,
- Fig. 3: eine Draufsicht auf den Kolben der Brennkraftmaschine,
- Fig. 4: einen Längsschnitt des Kolbens in einer Schnittführung gemäß Linie I-I in Fig. 2 bzw. Fig. 3,
- Fig. 5: einen Längsschnitt des Kolbens in einer Schnittführung gemäß Linie II-II in Fig. 1 bzw. Fig. 3,
- Fig. 6: eine Ausführungsvariante der erfindungsgemäßen Brennkraftmaschine mit einem Einlaß- und einem Auslaßventil,
- Fig. 7: eine Variante mit zwei Einlaßventilen und einem Auslaßventil,
- Fig. 8: eine Variante mit zwei Einlaßventilen und zwei Auslaßventilen sowie
- Fig. 9: eine Variante mit drei Einlaßventilen und zwei Auslaßventilen pro Zylinder der Brennkraftmaschine.

Funktionsgleiche Teile sind in den Ausführungsvarianten mit gleichen Bezugszeichen versehen.

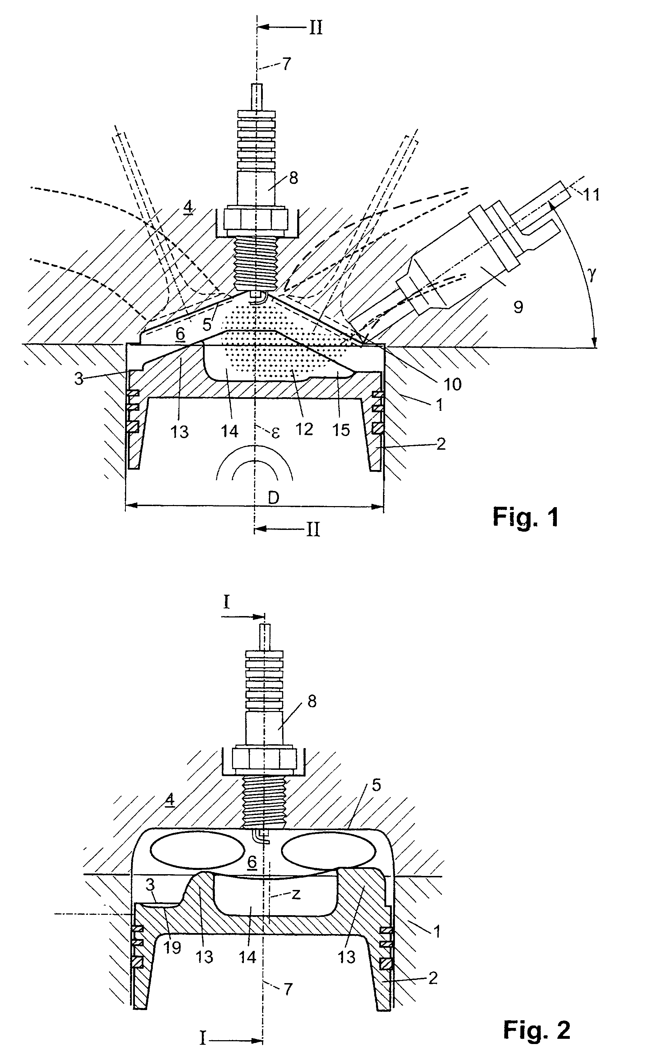

In einem Zylinder 1 ist ein hin- und hergehender Kolben 2 angeordnet. Die Oberfläche 3 des Kolbens 2 bildet zusammen mit der im Zylinderkopf 4 dachförmig ausgebildeten Brennraumdeckfläche 5 einen Brennraum 6 aus, in welchen eine Zündeinreichtung 8 einmündet. Die Mündung 10 einer Kraftstoffeinbringungseinrichtung 9 befindet sich am Rand des Brennraumes 6. Die Längsachse der Kraftstoffeinbringungseinrichtung 9 ist mit 11 bezeichnet, der Winkel γ zwischen der Längsachse 11 und der Ebene des Zylinderkopfes 4 beträgt 25 bis 60°. Die Kraftstoffeinbringungseinrichtung 9 ist so angeordnet, daß ein eingespritzer Kraftstoffstrahl 12 im wesentlichen zur Zündeinrichtung 8 gerichtet ist, und der Kraftstoffstrahl 12 etwa im Bereich der Brennraummulde 14 des Kolben 2 auf dessen Oberfläche 3 auftrifft. Für die folgenden Winkel- und Entfernungsangaben wird eine Bezugsebene ε eingeführt, welche durch die Verschneidungslinie der beiden dachförmigen Begrenzungsflächen des Brennraum 6 und der Kolbenachse 7 aufgespannt wird. (siehe Fig. 1 bzw. Fig. 3).

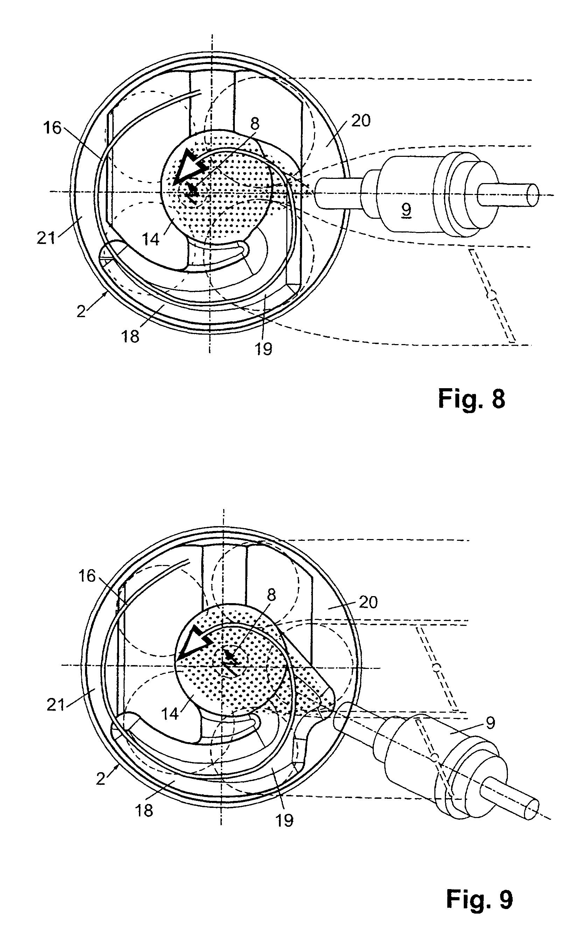

Wie aus den Figuren 1 bis 9 ersichtlich, ist an der Kolbenoberfläche 3 eine die Drallbewegung der Zylinderladung unterstützende, asymmetrische, bogenförmige Leitrippe 13 angeformt, welche in ihrer äußeren Kontur die dachförmige Begrenzung des Brennraum 6 weitgehend nachbildet ist, und die im wesentlichen zentral ausgebildete Brennraummulde 14 sowie einen im Bereich der Kraftstoffeinbringungseinrichtung 9 liegenden Muldeneinlauf 15 aufweist. In Richtung der mit 16 bezeichneten Drallströmung (siehe z. B. Fig. 3) weist die Leitrippe 13 ein sich in Breite und Höhe verjüngendes Ende 17 auf.

Weiters ist ausgehend vom Muldeneinlauf 15 ein um das sich verjüngende Ende 17 der Leitrippe 13 herumgeführter Muldenzulauf 18 vorgesehen, welcher als rinnenartige Vertiefung 19 in die Kolbenoberfläche 3 eingearbeitet ist.

Die ebenen Teile der Kolbenoberfläche 3 verbreitern sich einlaßseitig und auslaßseitig zu Quetschflächen 20, 21, wobei die Leitrippe 13 im Anschluß an diese Quetschflächen jeweils dachförmige Begrenzungsflächen 22, 23 aufweist, welche durch eine zur Kolbenoberfläche 3 parallele Abflachung 24 miteinander verbunden sein können.

Wie inbesondere aus den Figuren 3 bis 5 ersichtlich weist die Erfindung folgende Merkmale auf:

| | |
|---|---|
| Muldendurchmesser Dₘ | 0,3*D < Dₘ < 0,6*D |
| Tiefe der Mulde Tₘ | 0,1*D < Tₘ < 0,23*D |
| Tiefe unter der Quetschfläche T_{uq} | 0,02*D < T_{uq} < 0,14*D |
| Breite der Leitrippe B | 0,06*D < B < 0,15*D |
| Exzentrizität E | -0,03*D < E < +0,12*D |
| Exzentrizität Eₕ | -0,12*D < Eₕ < 0,12*D |
| Leitrippenanfang | 20° < α < 70° |
| Leitrippenende | 120° < β < 170° |
| Neigung der Strömungsleitfläche | -5° < δ < 20° |

Die Angaben über die Exzentrizität beziehen sich auf den Flächenschwerpunkt z der Brennraummulde 14 in der Ebene der Kolbenoberfläche 3. Die Brennraummulde 14 kann auch im wesentlichen kreisförmig ausgebildet sein. Mit D wird jeweils der Kolbendurchmesser bezeichnet. Die Winkelangaben im Zusammenhang mit dem Anfang 25 und dem Ende 17 der Leitrippe 13 werden ausgehend von der Bezugsebene ε im Uhrzeigersinn um die Kolbenachse 7 gemessen. Die innere Strömungsleitfläche 13', welche die Brennraummulde begrenzt, kann nach außen (δ < 5°) oder nach innen (δ < 20°) geneigt sein.

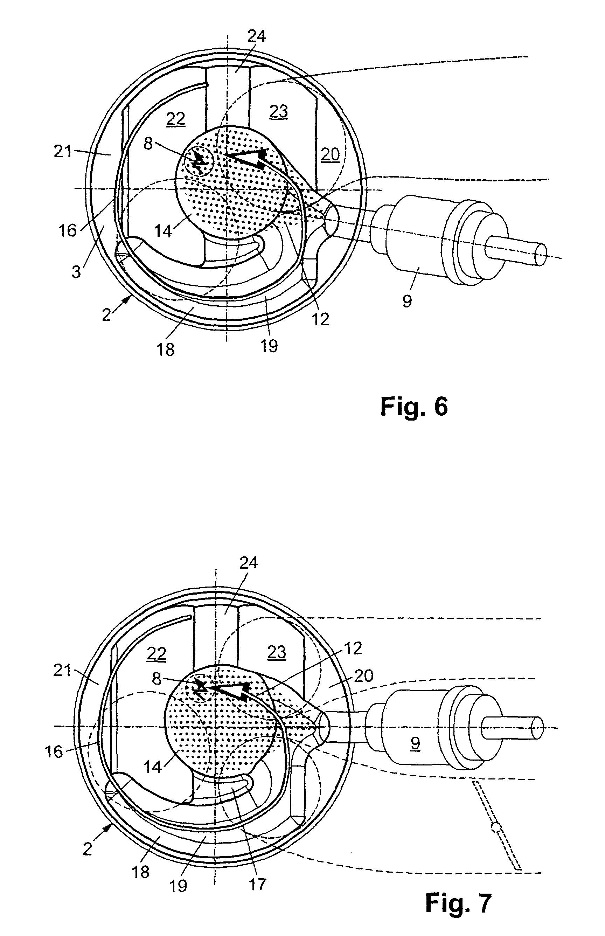

Wie aus den Figuren 6 bis 9 ersichtlich kann die Erfindung vorteilhaft auf Ausführungsvarianten mit zwei, drei, vier oder fünf Ventilen pro Zylinder angewandt werden.

## Patentansprüche

1. Brennkraftmaschine mit Fremdzündung und zumindest einem hin- und hergehenden Kolben (2), mit einer Zündeinrichtung (8) und mindestens einer Kraftstoffeinbringungseinrichtung (9) pro Zylinder (1) zur direkten Kraftstoffeinbringung im wesentlichen in Richtung Zündeinrichtung (8), sowie mit zumindest einem eine Drallströmung im dachförmig begrenzten Brennraum (6) erzeugenden Einlaßkanal, wobei die Oberfläche (3) des Kolbens (2) eine die Drallbewegung der Zylinderladung unterstützende, asymmetrische, bogenförmige Leitrippe (13) aufweist, **dadurch gekennzeichnet, daß** die Leitrippe (13) durch eine Anformung an der Kolbenoberfläche (3) gebildet ist, welche die dachförmige Begrenzung des Brennraumes (6) weitgehend nachbildet, und eine im wesentlichen zentral ausgebildete Brennraummulde (14) sowie einen im Bereich der Kraftstoffeinbringungseinrichtung (9) liegenden Muldeneinlauf(15) ausweist, sowie daß die Leitrippe (13) in Richtung der Drallströmung ein sich in Breite und Höhe verjüngendes Ende (17) aufweist.

2. Brennkraftmaschine nach Anspruch 1, **dadurch gekennzeichnet, daß** ausgehend vom Muldeneinlauf (15) ein um das sich verjüngende Ende (17) der Leitrippe (13) herumgeführter Muldenzulauf (18) vorgesehen ist, welcher als in die Kolbenoberfläche (3) eingearbeitete rinnenartige Vertiefung (19) ausgeführt ist.

3. Brennkraftmaschine nach Anspruch 1 oder 2, **dadurch gekennzeichnet, daß** an der Kolbenoberfläche (3) einlaßseitige und auslaßseitige Quetschflächen (20, 21) ausgebildet sind, wobei die Leitrippe (13) im Anschluß an diese Quetschflächen jeweils dachförmige Begrenzungsflächen (22, 23) aufweist, welche gegebenenfalls durch eine zur Kolbenoberfläche (3) parallele Abflachung (24) verbunden sind.

4. Brennkraftmaschine nach einem der Ansprüche 1 bis 3, **dadurch gekennzeichnet, daß** der Flächenschwerpunkt z der Brennraummulde (14) in der Ebene der Kolbenoberfläche (3) zu einer Bezugsebene E eine Exzentrizität Eₕ aufweist, für welche gilt -0,12*D < Eₕ < 0,12*D, wobei die Bezugsebene ε durch die Verschneidungslinie der beiden dachförmigen Begrenzungsflächen des Brennraumes (6) und der Kolbenachse (7) definiert ist und mit D der Kolbendurchmesser bezeichnet ist.

5. Brennkraftmaschine nach Anspruch 4, **dadurch gekennzeichnet, daß** der Flächenschwerpunkt z der Brennraummulde (14) eine Exzentrizität E im Bezug auf die Kolbenachse (7) parallel zur Bezugsebene ε aufweist, für die gilt -0,03*D < E <+0,12*D.

6. Brennkraftmaschine nach einem der Ansprüche 4 oder 5, **dadurch gekennzeichnet, daß** die Brennraummulde (14) im wesentlichen kreisförmig ausgebildet ist.

7. Brennkraftmaschine nach einem der Ansprüche 1 bis 6, **dadurch gekennzeichnet, daß** der Durchmesser Dₘ der Brennraummulde (14) zwischen 0,3*D und 0,6*D liegt, wobei D der Kolbendurchmesser ist.

8. Brennkraftmaschine nach einem der Ansprüche 1 bis 7, **dadurch gekennzeichnet, daß** die Tiefe Tₘ der Brennraummulde (14) zwischen 0,1*D und 0,23*D liegt, wobei D der Kolbendurchmesser ist.

9. Brennkraftmaschine nach einem der Ansprüche 4 bis 8, **dadurch gekennzeichnet, daß** der Anfang (25) der Leitrippe (13) so angeordnet ist, daß gilt: 20° < α < 70°, wobei α der im Uhrzeigersinn um die Kolbenachse (7) gemessene Winkel zwischen der Bezugsebene ε und dem Anfangsbereich (25) der Leitrippe (13) ist.

10. Brennkraftmaschine nach einem der Ansprüche 4 bis 9, **dadurch gekennzeichnet, daß** das sich verjüngende Ende (17) der Leitrippe (13) so angeordnet ist, daß gilt: 120° < β < 170°, wobei β der im Uhrzeigersinn um die Kolbenachse (7) gemessene Winkel zwischen der Bezugsebene ε und dem Ende (17) der Leitrippe (13) ist.

11. Brennkraftmaschine nach einem der Ansprüche 1 bis 10, **dadurch gekennzeichnet, daß** die innere Strömungsleitfläche (13') der Leitrippe (13) zur Kolbenachse (7) einen Winkel δ zwischen -5° und 20° aufweist.

12. Brennkraftmaschine nach einem der Ansprüche 2 bis 11, **dadurch gekennzeichnet, daß** die Tiefe Tₘ der Brennraum-mulde (14) größer ist als jene des rinnenartigen Muldenzulaufs (18).

## Claims

1. Internal combustion engine with spark ignition and at least one reciprocating piston (2), with an ignition device (8) and at least one fuel delivery device (9) per cylinder (1) for direct fuel delivery essentially in the direction of the ignition device (8), and with at least one intake port generating a swirl movement in the combustion chamber (6) bounded by a roof-shaped top face, the top surface (3) of the piston (2) being provided with an unsymmetrical, arched flow guiding rib (13) assisting the swirl movement of the cylinder charge, **characterized in that** the flow guiding rib (13) is configured as an integral part of the piston top surface (3), which largely conforms to the roof-shaped top of the combustion chamber (6) and exhibits an essentially centrically positioned combustion chamber recess (14) with an entrance area (15) in proximity of the fuel delivery device (9), and wherein the flow guiding rib (13) has a tapered end (17) of reduced width and height in the direction of the swirl flow.

2. Internal combustion engine as claimed in Claim 1, **characterized in that** an inlet passage (18) is provided which departs from the entrance area (15) of the combustion chamber recess (14) and winds around the tapered end (17) of the flow guiding rib (13), and which is configured as a groove-type depression (19) sunk into the piston top surface (3).

3. Internal combustion engine as claimed in Claim 1 or 2, **characterized in that** compression faces (20, 21) are provided on the inlet and outlet sides of the piston top surface (3), the flow guiding rib (13) having roof-shaped bounding surfaces (22, 23) adjacent to said compression faces (20, 21), which may be connected by a plane area (24) parallel to the piston top surface (3).

4. Internal combustion engine as claimed in any of Claims 1 to 3, **characterized in that** the plane centre of gravity z of the combustion chamber recess (14) exhibits an eccentricity Eₕ in the plane of the piston top surface (3) relative to a reference plane ε, which eccentricity obeys the conditions: -0.12*D < Eₕ < 0.12*D, the reference plane ε being defined by the intersection line of the two roof-shaped top faces of the combustion chamber (6) and the piston axis (7), and D being the piston diameter.

5. Internal combustion engine as claimed in Claim 4, **characterized in that** the plane centre of gravity z of the combustion chamber recess (14) exhibits an eccentricity E relative to the piston axis (7) parallel to reference plane ε, which obeys the conditions: -0.03*D < E < +0.12*D.

6. Internal combustion engine as claimed in any of Claims 4 or 5, **characterized in that** the combustion chamber recess (14) is of substantially circular shape.

7. Internal combustion engine as claimed in any of Claims 1 to 6, **characterized in that** the diameter Dₘ of the combustion chamber recess (14) is between 0.3*D and 0.6*D, D being the piston diameter.

8. Internal combustion engine as claimed in any of Claims 1 to 7, **characterized in that** the depth Tₘ of the combustion chamber recess (14) is between 0.1*D and 0.23*D, D being the piston diameter.

9. Internal combustion engine as claimed in any of Claims 4 to 8, **characterized in that** the starting point (25) of the flow guiding rib (13) is positioned such that 20°< α < 70°, α being the angle between the reference plane ε and the starting point (25) of the flow guiding rib (13), as measured in clockwise direction about the piston axis (7).

10. Internal combustion engine as claimed in any of Claims 4 to 9, **characterized in that** the tapered end (17) of the flow guiding rib (13) is positioned such that 120° < β < 170°, β being the angle between the reference plane ε and the end point (17) of the flow guiding rib (13), as measured in clockwise direction about the piston axis (7).

11. Internal combustion engine as claimed in any of Claims 1 to 10, **characterized in that** the inner flow guiding face (13') of the flow guiding rib (13) forms an angle δ of -5° to 20° with the piston axis (7).

12. Internal combustion engine as claimed in any of Claims 2 to 11, **characterized in that** the depth Tₘ of the combustion chamber recess (14) exceeds that of the groove-type inlet passage (18) into said recess (14).

## Revendications

1. Moteur à combustion interne avec allumage commandé et ayant au moins un piston (2) effectuant un mouvement de va-et-vient, comprenant une installation d'allumage (8) et au moins une installation d'injection de carburant (9) par cylindre (1) pour introduire directement le carburant essentiellement en direction de l'installation d'allumage (8) et au moins un canal d'admission générant un écoulement de rotation dans la chambre de combustion (6) délimitée par une forme de dièdre, la surface supérieure (3) du piston (2) ayant une lèvre de guidage (13) en forme d'arc, asymétrique, supportant le mouvement de rotation de la charge du cylindre,
**caractérisé en ce que**
la lèvre de guidage (13) est réalisée par une mise en forme de la surface supérieure (3) du piston qui suit dans une très large mesure la forme de la limite en dièdre de la chambre de combustion (6) et une goulotte de chambre de combustion (14) essentiellement centrale, ainsi qu'une entrée de goulotte (15) située au niveau de l'installation d'injection de carburant (9), et
la lèvre de guidage (13) présente une extrémité (17) dont la largeur et la hauteur diminuent dans le sens de l'écoulement de rotation.

2. Moteur à combustion interne selon la revendication 1,
**caractérisé en ce que**
partant de l'entrée (15) de la goulotte, il est prévu une alimentation de goulotte (18) entourant l'extrémité (17) allant en diminuant de la lèvre de guidage (13), cette entrée étant réalisée sous la forme d'une cavité (19) en forme de rainure usinée dans la surface supérieure (3) du piston.

3. Moteur à combustion interne selon la revendication 1 ou 2,
**caractérisé en ce que**
la surface supérieure (3) du piston comporte des surfaces d'écrasement (20, 21) du côté de l'admission et du côté de l'échappement,
la nervure de guidage (13) ayant de manière adjacente à ces surfaces d'écrasement, chaque fois une surface limite (22, 23) en forme de dièdre et ces surfaces sont le cas échéant reliées par une partie aplatie (24) parallèle à la surface supérieure (3) du piston.

4. Moteur à combustion interne selon l'une quelconque des revendications 1 à 3,
**caractérisé en ce que**
le centre de gravité (z) de la surface de la goulotte (14) de la chambre de combustion présente dans le plan de la surface supérieure (3) du piston, par rapport à un plan de référence (ε), une excentricité (Eₕ) répondant à la relation -0,12*D < Eₕ < 0,12*D, le plan de référence (ε) passant par la ligne d'intersection des deux surfaces limites en forme de dièdres de la chambre de combustion (6) et l'axe (7) du piston, et (D) représentant le diamètre du piston.

5. Moteur à combustion interne selon la revendication 4,
**caractérisé en ce que**
le centre de gravité (z) de la surface de la goulotte de la chambre de combustion (14) présente une excentricité (E) par rapport à l'axe (7) du piston, parallèlement au plan de référence (E), répondant à la relation -0,03*D<E<+0.12*D.

6. Moteur à combustion interne selon l'une des revendications 4 ou 5,
**caractérisé en ce que**
la goulotte (14) de la chambre de combustion a une forme essentiellement circulaire.

7. Moteur à combustion interne selon l'une quelconque des revendications 1 à 6,
**caractérisé en ce que**
le diamètre Dₘ de la goulotte (14) de la chambre de combustion est compris entre 0,3*D et 0,6*D, D étant le diamètre du piston.

8. Moteur à combustion interne selon l'une quelconque des revendications 1 à 7,
**caractérisé en ce que**
la profondeur Tₘ de la goulotte (14) de la chambre de combustion est comprise entre 0,1*D et 0,23*D, D étant le diamètre du piston.

9. Moteur à combustion interne selon l'une quelconque des revendications 4 à 8,
**caractérisé en ce que**
le début (25) de la lèvre de guidage (13) est disposé de façon à avoir : 20° < α < 70° dans laquelle (α) représente l'angle compris entre le plan de référence (e) et la zone initiale (25) de la lèvre de guidage (13), cet angle étant mesuré dans le sens de rotation des aiguilles d'une montre autour de l'axe (7) du piston.

10. Moteur à combustion interne selon l'une quelconque des revendications 4 à 9,
**caractérisé en ce que**
l'extrémité (17) diminuant de la lèvre de guidage (13) est installée pour répondre à la relation 120°<β<170° dans laquelle (β) représente l'angle compris entre le plan de référence (ε) et l'extrémité (17) de lèvre de guidage (13), cet angle étant mesuré dans le sens de rotation des aiguilles d'une montre autour de l'axe (7) du piston.

11. Moteur à combustion interne selon l'une quelconque des revendications 1 à 10,
**caractérisé en ce que**
la surface de guidage d'écoulement (13') intérieure de la lèvre de guidage (13) fait par rapport à l'axe (7) du piston un angle (δ) compris entre -5° et 20°.

12. Moteur à combustion interne selon l'une quelconque des revendications 2 à 11,
**caractérisé en ce que**
la profondeur Tₘ de la goulotte (14) de la chambre de combustion est supérieure à celle de l'alimentation (18) de la goulotte en forme de rainure.
